# EUROPÄISCHE PATENTSCHRIFT

(11) **EP 0 716 957 B1**
(45) Veröffentlichungstag und Bekanntmachung des Hinweises auf die Patenterteilung: **20.05.1998**
(21) Anmeldenummer: 95118501.6
(22) Anmeldetag: 24.11.1995
(51) Int. Cl.: B60R 1/06

(54) **Fahrzeugaussenspiegel**
Exterior rear-view mirror assembly for a vehicle
Rétroviseur extérieur pour véhicule

(30) Priorität: 17.12.1994 DE 9420273 U
(43) Veröffentlichungstag der Anmeldung: 19.06.1996
(73) Patentinhaber: Donnelly Hohe GmbH & Co. KG, 97903 Collenberg (DE)
(72) Erfinder: Seubert, Richard, D-63927 Bürgstadt (DE); Marks, Karl-Josef, D-97903 Collenberg (DE)
(74) Vertreter: Zinngrebe, Horst, Dr.rer.nat.

(56) Entgegenhaltungen:
- EP-A- 0 173 433
- EP-A- 0 620 138
- DE-A- 4 204 621
- DE-U- 8 914 759
- FR-A- 2 314 642
- FR-A- 2 501 600
- FR-A- 2 504 075

## Beschreibung

Die Erfindung betrifft einen Außenspiegel für ein Kraftfahrzeug mit einem an der Karosserie des Fahrzeugs befestigbaren Spiegelfuß und mit einem relativ zum Spiegelfuß verschwenkbaren Spiegelgehäuse, welches ein auf einer Halteplatte befestigtes Spiegelglas seitlich umgibt, über die Ebene des Spiegelglasses nach hinten unter Bildung eines umlaufenden Randwulstes vorsteht und aus einer an die Halteplatte lösbar anklemmbaren Kappe sowie einem Rumpfteil besteht.

Aus der deutschen Gebrauchsmusterschrift 89 14 759 ist ein Außenspiegel für ein Kraftfahrzeug mit aufsteckbarer Kappe der vorstehend genannten Art bekannt, bei welchem das Spiegelgehäuse vorne aufgeschnitten ist und die Kappe die nach vorne freiliegenden Teile der Halteplatte abdeckend an die Halteplatte lösbar angeklemmt ist. Mit dem Aufteilen des Spiegelgehäuses in eine separat anlieferbare Kappe und einen mit der Halteplatte fest verbundenen Rumpfteil wird unter anderem das Ziel erreicht, die Farbe der wesentlichen Ansichtsteile des Außenspiegels der jeweiligen Karosseriefarbe anzupassen, ohne daß für jede Farbe jeweils ein vollständiger Außenspiegel auf Lager gehalten werden muß.

So ist beispielsweise in der deutschen Offenlegungsschrift 41 30 176 der Vorschlag gemacht worden, das Spiegelgehäuse als ganzes nach fertiger Montage eines Außenspiegelrumpfes am Fahrzeug auf diesen nachträglich aufzustecken und am Außenspiegelrumpf durch Rasten und Blattfedern zu verklemmen. Damit wird zwar die Möglichkeit eröffnet, das ganze Spiegelgehäuse der jeweils aktuellen Farbe der Fahrzeugkarosserie anzupassen; jedoch wirkt das Spiegelgehäuse dabei in vielen Fällen insbesondere in seiner Ansicht von vorne wegen seiner technisch bedingten Bauchigkeit recht plump.

Der Erfindung liegt daher die Aufgabe zugrunde, bei dem eingangs genannten Außenspiegel Maßnahmen vorzusehen, die sein Aussehen verbessern.

Dazu ist erfindungsgemäß vorgesehen, daß sich die Kappe über die Ebene des Spiegelglases nach hinten unter Bildung wenigstens eines wesentlichen Teiles des Randwulstes erstreckt. Mit der Erfindung wird eine zweifarbige Gestaltung des Spiegelgehäuses in Anlehnung an die Zweifarbigkeit vieler Fahrzeugkarosserien möglich, indem das Rumpfteil eine dunkle Farbe entsprechend dem unteren Rammschutzbereich der Karosserie erhält. Wenn in Weiterbildung der Erfindung an der Kappe der volle umlaufende Randwulst ausgebildet ist, bleibt nur die Unterseite des Spiegelgehäuses in dunklerem Farbton gehalten, während die Ansicht des Randwulstes von hinten, das heißt von der Position des Fahrers aus sich einheitlich in der Farbe der Fahrzeuglackierung darbieten kann. Es erweist sich weiter als zweckmäßig, wenn die Kappe von oben über den Außenspiegelrumpf geschoben und am Halteteil verrastet wird. Dazu erweist es sich als vorteilhaft, wenn eine am Halteteil vorgesehene Blattfeder beim Einrasten der Kappe einen Vorsprung der Kappe hintergreift, so daß die Kappe sicher gehalten ist. Zum Abnehmen der Kappe empfiehlt sich das Vorsehen einer Öffnung in der Kappe oder dem Rumpfteil, durch die mittels eines Werkzeugs die Feder zur Freigabe der Kappe abgelenkt werden kann. Weiterhin ist es zweckmäßig, das Rumpfteil an die Halteplatte anzuklipsen.

Die Erfindung wird nachstehend anhand des in der beigefügten Zeichnung dargestellten Ausführungsbeispiels im einzelnen beschrieben. Es zeigen:
- Fig. 1: eine schematische Ansicht einer Halteplatte eines Außenspiegels mit Rumpfteil und angedeuteter Kappe; und
- Fig. 2: einen Schnitt durch den Außenspiegel nach Fig. 1 längs der Linie II-II.

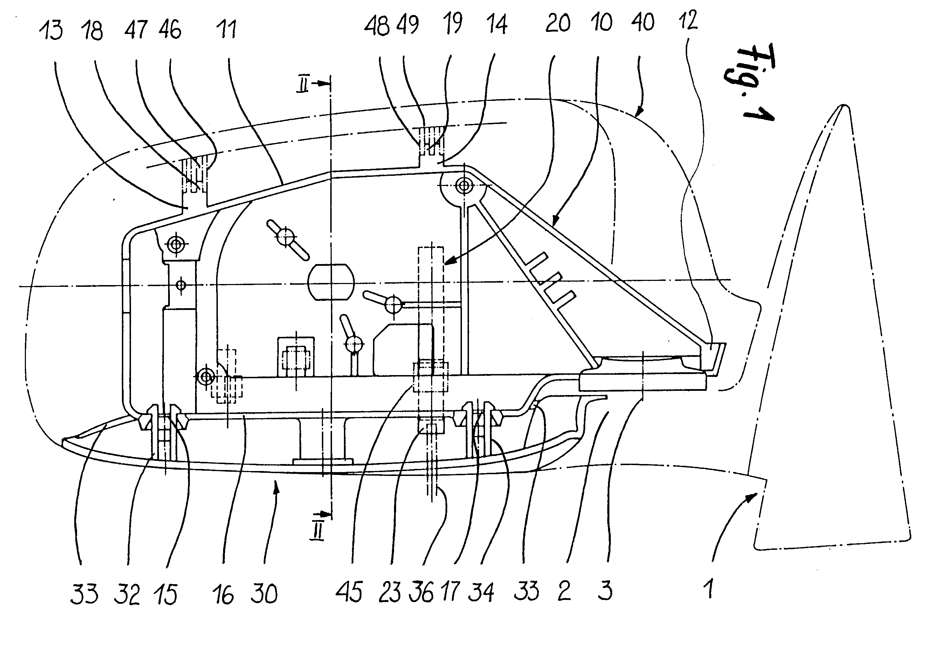

Auf einem in Fig. 1 nur strichpunktiert angedeuteten Spiegelfuß 1 ist über ein Schwenkgelenk 2 mit einer Schwenkachse 3, die nach Montage des Außenspiegels an einem Fahrzeug im wesentlichen vertikal verläuft, eine Halteplatte 10 befestigt. Die mit verschiedenen Verstärkungsprofilen versehene Halteplatte dient dazu, ein Spiegelglas 5 über einen Verstellmechanismus 4 aufzunehmen, der ein Verstellen des Spiegelglases 5 vom Fahrzeuginneren aus in eine gewünschte Position relativ zur Halteplatte 10 erlaubt.

Die Halteplatte 10 besitzt einen unteren, sich vom Spiegelfuß 1 weg erstreckenden Rand 16, der sich nach rückwärts erstreckt und zwei beabstandete Durchbrüche 15, 17 aufweist.

Die Halteplatte 10 besitzt ferner einen oberen Rand 11, der sich im wesentlichen in gleiche Richtung wie der untere Rand 16 erstreckt und aus welchem zwei beabstandete Pfosten 13, 14 sich nach oben erheben. Jeder der beiden Pfosten 13, 14 besitzt am freien Ende abstehende Finger 18, 19.

An die Vorderseite der Halteplatte 10 ist eine mehrfach abgewinkelte Blattfeder 20 angenietet. Diese erstreckt sich in einem ersten Abschnitt 21 nach unten und vorne, um danach unter Bildung eines spitzen Winkels sich bis kurz vor die Halteplatte 10 mit einem weiteren Abschnitt 22 zu erstrecken. Vom Abschnitt 22 der Blattfeder 20 erstreckt sich diese bis unter den Rand 16, ist dort im wesentlichen horizontal geführt und endet mit einem abgewinkelten Haken 23.

Ein Rumpfteil 30, das den unteren Teil des Spiegelgehäuses bildet, besteht aus einem wannenförmigen Kunststoffteil, aus dessen Innenseite zwei Paare Spreizfinger 32, 34 sich erheben. Der Mittenabstand der Spreizfingerpaare 32, 34 gleicht dem Abstand der Durchbrüche 15, 17 in der Halteplatte 10. Jeder der Spreizfinger der genannten Paare 32, 34 ist am freien Ende mit einem Widerhaken versehen, so daß das Rumpfteil 30 von unten an die Halteplatte 10 angeklipst werden kann, wobei die Spreizfingerpaare 32, 34 in die Durchbrüche 15, 17 eindringen und diese mit den Widerhaken elastisch hintergreifen.

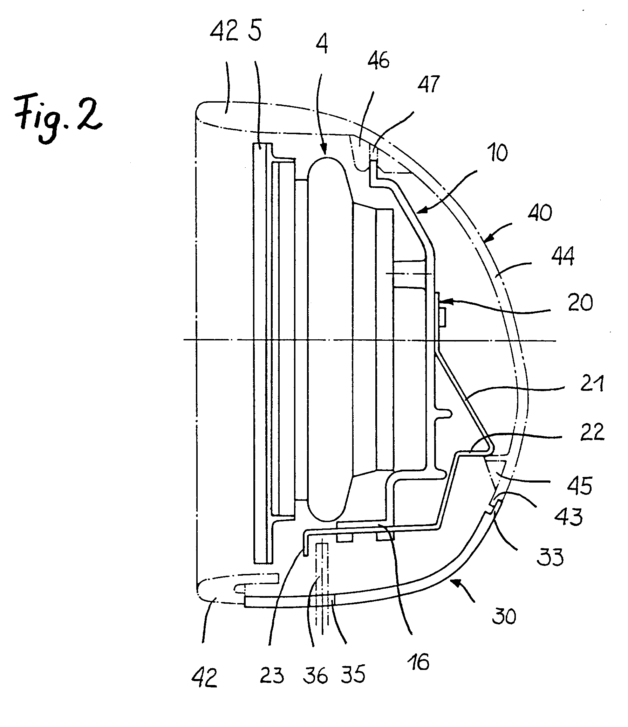

Der restliche Teil des Spiegelgehäuses besteht aus einer Kappe 40, welche von oben über die Halteplatte 10 geschoben werden kann. Die Kappe 40 weist in ihrem hinteren Abschnitt den Randwulst 42 auf, der im aufgesteckten Zustand der Kappe 40 das Spiegelglas 5 seitlich allseits umfaßt, nach rückwärts über das Spiegelglas 5 vorsteht und am unteren Abschnitt das Rumpfteil 30 umgreift (Fig. 2). Am vorderen Teil 44 ist die Kappe 40 bauchig gestaltet, um die Halteplatte mit Blattfeder 20 nach vorne abzudecken. Wie Fig. 2 zeigt, bilden die Kappe 40 zusammen mit dem Rumpfteil 30 das Spiegelgehäuse für den Außenspiegel.

Zum erwähnten Aufstecken der Kappe 40 sind aus der Innenfläche derselben im oberen Bereich oberhalb der Pfosten 13, 14 Nocken 46, 48 ausgebildet, wobei in jeder der Nocken eine Tasche 47, 49 vorgesehen ist. In jede der Taschen 47, 49 kann einer der Finger 18, 19 der Pfosten 13, 14 eintauchen. Wie Fig. 1 zeigt ist für jeden der Finger der Pfosten 13, 14 eine Tasche 47, 49 vorhanden. Beim Aufstecken der Kappe 40 greifen also die Finger 18, 19 in die Taschen 47, 49 bis zum Anschlag der Nocken 46, 48 an die Pfosten 13, 14, so daß hierdurch eine Tiefenreferenz gegeben ist.

An der Halteplatte 10 ist zwischen Schwenkachse 3 und Spiegelfuß 1 eine Anlageplatte 12 ausgebildet, gegen die die auf die Halteplatte 10 von oben aufgeschobene Kappe 40 von außen anliegt. Die Anlageplatte 12 legt die Kappe 40 in einer vom Spiegelfuß wegweisenden Richtung fest.

Weiterhin steht aus der Innenfläche des vorderen Kappenabschnittes 44 in der Nähe seines unteren Endes eine Schulter 45 vor. Beim Aufstecken der Kappe 40 drückt die Schulter 45 den Abschnitt 21 der Blattfeder 20 solange nach rückwärts, bis der Abschnitt 22 der Blattfeder 20 über die Schulter 45 nach vorne einrastet.

Ferner ist das untere Ende des Kappenabschnittes 44 bei 43 einwärts abgestuft und das Rumpfteil 30 bei 33 auswärts abgestuft, so daß die Stufe 43 die Stufe 33 hintergreift, wenn die Kappe 40 auf die Halteplatte 10 aufgesteckt ist.

Es versteht sich, daß an der Innenfläche des Kappenabschnittes 44 sowie an der Vorderseite der Halteplatte 10 weitere Halteelemente vorgesehen sein können, die beim Aufstecken der Kappe 40 auf die Halteplatte 10 ineinandergreifen, die Kappe 40 rüttelfrei halten und deren Abnahme nach oben erlauben.

Zur Abnahme der Kappe 40 von der Halteplatte 10 nach oben ist in dem Rumpfteil 30 eine Öffnung 35 vorgesehen, die unterhalb des Hakens 23 und kurz vor demselben plaziert ist. Durch die Öffnung 35 kann ein Werkzeug 36 beispielsweise in Form eines Schraubendrehers eingeführt werden. Mit dem Werkzeug kann der Haken 23 der Blattfeder 20 soweit nach hinten gedrückt werden, daß die Federabschnitte 21, 22 von der Auflage auf der Schulter 45 freikommen und somit ein Abziehen der Kappe 40 nach oben erlauben. Selbstverständlich kann die Öffnung 35 auch im Kappenabschnitt 44 oder anderer verdeckter Stelle des Spiegelgehäuses vorgesehen sein.

## Patentansprüche

1. Außenspiegel für ein Kfz mit einem an der Karosserie des Fahrzeugs befestigbaren Spiegelfuß (1) und mit einem relativ zum Spiegelfuß (1) verschwenkbaren Spiegelgehäuse (30, 40), welches ein auf einer Halteplatte (10) befestigtes Spiegelglas (5) seitlich umgibt, über die Ebene des Spiegelglases (5) nach hinten unter Bildung eines umlaufenden Randwulstes (42) vorsteht und aus einer an die Halteplatte (10) lösbar anklemmbaren Kappe (40) sowie einem Rumpfteil (30) besteht, dadurch gekennzeichnet, daß sich die Kappe (40) über die Ebene des Spiegelglases (5) nach hinten unter Bildung wenigstens eines wesentlichen Teiles des Randwulstes (42) erstreckt.

2. Außenspiegel nach Anspruch 1, dadurch gekennzeichnet, daß das wannenartige Rumpfteil die Halteplatte (10) unten umgibt.

3. Außenspiegel nach Anspruch 1 oder, dadurch gekennzeichnet, daß an der Kappe (40) der volle umlaufende Randwulst (42) ausgebildet ist.

4. Außenspiegel nach einem der vorstehenden Ansprüche, dadurch gekennzeichnet, daß die Kappe (40) von oben über die Halteplatte durch Einrasten wenigstens eines Paares von Halteelementen (20, 45) an der Halteplatte (10) montierbar ist.

5. Außenspiegel nach Anspruch 4, dadurch gekennzeichnet, daß an der Halteplatte (10) eine Rastfeder (20) befestigt und derart gebogen ist, daß sie bei Montage der Kappe (40) eine aus dieser vorstehende Schulter (45) einrastend übergreift.

6. Außenspiegel nach Anspruch 5, dadurch gekennzeichnet, daß der Rasteingriff der Feder (20) durch eine Öffnung (35) im Rumpfteil (30) von außen aufhebbar ist.

7. Außenspiegel nach einem der vorstehenden Ansprüche, dadurch gekennzeichnet, daß von der Halteplatte (10) Pfosten (13, 14) vorstehen, die mit Fingern (37, 49) in an der Kappe ausgebildete Nocken (46, 48) bei der Montage derselben eingreifen.

8. Außenspiegel nach einem der vorstehenden Ansprüche, dadurch gekennzeichnet, daß das Rumpfteil (30) an die Halteplatte (10) mittels wenigstens eines Paares elastischer Finger (32, 34) anklipsbar ist.

9. Außenspiegel nach einem oder mehreren der vorstehenden Ansprüche, dadurch gekennzeichnet, daß an der Halteplatte (10) ein Anlageelement (12) ausgebildet ist, welches die aufgesteckte Kappe (40) in einer vom Spiegelfuß (1) wegweisenden Richtung sichert.

## Claims

1. Exterior mirror for a motor vehicle with a mirror base (1) fixable to the body of the motor vehicle and with a minor housing (30, 40) which is swingable with respect to the minor base (1), surrounds on all sides a mirror glass (5) is fixed to a mounting plate (10), projects rearwardly over the plane of the mirror glass (5) to form an encircling edge bead structure (42) and consists of a cap (40) releasably fixable to the mounting plate (10) as well as of a trunk part (30) characterized in that the cap (40) extends rearwardly over the plane of the minor glass (5) thereby forming at least a substantial part of the edge bead structure (42).

2. Exterior mirror according to claim 1, characterized in that the trough-like trunk part surrounds the underside of the mounting plate (10).

3. Exterior mirror according to claim 1 or , characterized in that the complete encircling edge bead structure (42) is placed on the cap (40).

4. Exterior mirror according to one of the preceding claims, characterized in that the cap (40) is mountable from above over the mounting plate and is fixable to said mounting plate (10) by catching of at least one pair of holding elements (20, 45).

5. Exterior mirror according to claim 4, characterized in that a stop spring (20) is fixed to the mounting plate (10) and bent in such a way that, when mounting the cap, it engages interlockingly a shoulder (45) part protruding out of the cap (40), when mounting the latter.

6. Exterior mirror according to claim 5, characterized in that the engagement of the spring (20) can be released by intervention from the outside through an opening (35) in the trunk part (30).

7. Exterior mirror according to one of the preceding claims, characterized in that posts (13, 14) protruding from the mounting plate (10) have fingers (37, 49) which, when mounting the cap, engage into cams (46, 48) shaped in said cap.

8. Exterior mirror according to one of the preceding claims, characterized in that the trunk part (30) can be clipped to the mounting plate (10) by means of at least one pair of elastic fingers (32, 34).

9. Exterior mirror according to one or more of the preceding claims, characterized in that a contact element (12) is provided on the mounting plate (10) which forces the mounted cap to a direction away from the mirror base.

## Revendications

1. Rétroviseur extérieur pour véhicule avec base de rétroviseur (1) fixable à la carrosserie du véhicule et avec boîtier de rétroviseur (30, 40) pivotable par rapport à la base du rétroviseur (1), lequel boîtier entoure latéralement une glace de rétroviseur (5) fixée sur une plaque de support (10), fait saillie sur le plan de la glace de rétroviseur (5) vers l'arrière en formant un bourrelet de bordure (42) encerclant et constitué d'une calotte (40) pouvant être pressée contre la plaque de support (10) de façon détachable de même que d'une partie formant tronc (30), caractérisé en ce que la calotte (40) s'étend au dessus du plan de la glace de rétroviseur (5) vers l'arrière en formant au moins une partie substantielle du bourrelet de bordure (42).

2. Rétroviseur extérieur selon la revendication 1, caractérisé en ce que la partie en cuvette formant tronc entoure le bas de la plaque de support (10).

3. Rétroviseur extérieur selon la revendication 1 ou , caractérisé en ce que tout le bourrelet de bordure (42) faisant cercle est formé sur la calotte (40).

4. Rétroviseur selon l'une des revendications précédentes, caractérisé en ce que la calotte (40) peut être montée sur la plaque de support (10) d'en haut au-dessus de la plaque de support par enclenchement d'au moins une paire d'éléments de support (20, 45).

5. Rétroviseur extérieur selon la revendication 4, caractérisé en ce qu'un ressort à cran d'arrêt (20) est fixé à la plaque de support (10) et est courbé de telle façon que lors du montage de la calotte (40) il enserre par enclenchement un épaulement (45) qui ressort de celle-ci.

6. Rétroviseur extérieur selon la revendication 5, caractérisé en ce que l'enclenchement du ressort (20) peut être supprimé de l'extérieur par l'ouverture (35) dans la partie formant tronc (30).

7. Rétroviseur extérieur selon l'une des revendications précédentes, caractérisé en ce que des montants (13, 14) font saillie de la plaque de support (10) qui, au montage de la calotte, se mettent en prise à l'aide de doigts (37, 49) avec des cames (46, 48) conçues sur celle-ci

8. Rétroviseur extérieur selon l'une des revendications précédentes, caractérisé en ce que la partie formant tronc (30) peut être fixée comme un clips à la plaque de support (10) au moyen d'au moins une paire de doigts élastiques (32, 34).

9. Rétroviseur extérieur selon l'une ou plusieurs des revendications précédentes, caractérisé en ce que sur la plaque de support (10) un élément de contact (12) est conçu qui force la calotte posée (40) à aller en direction opposée à la base du rétroviseur (1).
